# EUROPEAN PATENT SPECIFICATION

(11) **EP 3 967 730 B1**
(45) Date of publication and mention of the grant of the patent: **06.12.2023**
(21) Application number: 20802548.6
(22) Date of filing: 24.04.2020
(51) Int. Cl.: C08L 83/06, C08K 5/5415, C08K 5/544, C08L 83/14, C09D 183/06, C09D 183/14, C09J 183/06, C09J 183/14, C09K 3/10, C08G 77/26, C08K 3/36, C08L 83/04, C09J 183/04, C08G 77/14

(54) **ROOM-TEMPERATURE-VULCANIZING ORGANOPOLYSILOXANE COMPOSITION, SILICONE RUBBER, AND ARTICLE**
BEI RAUMTEMPERATUR VULKANISIERENDE ORGANOPOLYSILOXANZUSAMMENSETZUNG, SILIKONKAUTSCHUK UND ARTIKEL
COMPOSITION D'ORGANOPOLYSILOXANE À VULCANISATION À TEMPÉRATURE AMBIANTE, CAOUTCHOUC DE SILICONE ET ARTICLE

(30) Priority: 09.05.2019 JP 2019088868
(43) Date of publication of application: 16.03.2022
(73) Proprietor: Shin-Etsu Chemical Co., Ltd., Tokyo 100-0005 (JP)
(72) Inventor: FUJIWARA, Akitsugu, Annaka-shi, Gunma 379-0224 (JP); SAKAMOTO, Takafumi, Annaka-shi, Gunma 379-0224 (JP)
(74) Representative: Mewburn Ellis LLP
(86) International application number: PCT/JP2020/017666
(87) International publication number: WO 2020/226076

(56) References cited:
- WO-A1-2019/069706
- WO-A1-2019/219927
- WO-A1-2020/109187
- CN-A- 105 238 342
- CN-A- 107 523 257
- JP-A- S6 451 056
- JP-A- S58 185 594
- JP-A- 2010 537 015
- JP-A- 2016 516 101
- JP-A- 2018 513 129
- JP-A- 2018 515 634

## Description

### TECHNICAL FIELD

This invention relates to a room temperature vulcanizable organopolysiloxane composition comprising an organopolysiloxane having hydrolyzable silyl groups at both ends of the molecular chain as a main component or base polymer in combination with a lactato-silane capable of releasing a lactate, as a crosslinker, the composition curing into a cured product having excellent safety, low odor, adhesion, curability, and moisture resistance; a silicone rubber comprising a cured product of the composition; and an article which is coated, sealed, secured or bonded by a cured product of the composition.

### BACKGROUND ART

Since room temperature vulcanizable (RTV) silicone rubber compositions which cure or crosslink through condensation reaction with airborne moisture at room temperature (25±10°C) are easy to handle and have good weather resistance and electrical properties, they are used in a variety of fields including sealants for building members and adhesives in electric and electronic fields. Most of these RTV silicone rubber compositions are designed as comprising an organopolysiloxane capped at molecular chain ends with silanol groups (silicon-bonded hydroxy groups) or hydrolyzable silyl groups as the main component or base polymer.

It is generally known that depending on the type of an elimination compound released out of the system as a result of condensation reaction of a crosslinker with a base polymer, RTV silicone rubber compositions are divided into various cure types including alcohol release, oxime release, acetic acid release, and acetone release types. They are used in a variety of applications. For example, RTV silicone rubber compositions of alcohol release type are widely used as adhesive or coating for securing electric and electronic parts, adhesive for automobiles, and the like. RTV silicone rubber compositions of oxime and acetic acid release types are mainly used as building member sealing material because of relatively fast cure reaction, but carry with them a safety problem because they give off toxic or irritating odor gases upon curing. Also the compositions of oxime and acetic acid release types must be used with care because of the potential risk of corrosion of adherends.

In addition to the above-described RTV silicone rubber compositions of alcohol release, oxime release, acetic acid release, and acetone release types, compositions of another cure type, i.e., lactate release type adapted to generate a lactate upon curing recently began to draw attention. Ethyl lactate, which is typical of lactates, is contained in naturally occurring products such as wine and fruits and quite useful as a flavor for foods. Also, lactates are used as food additives and perfume ingredients, not acknowledged to be carcinogenic or mutagenic, and known to be friendly to the human body and environment.

In the prior art, Patent Document 1 (JP 5399392) discloses a RTV silicone rubber composition of lactate release type due to condensation reaction. Patent Document 1 shows that a RTV silicone rubber composition comprising a polydimethylsiloxane having silanol groups at both ends of the molecular chain and an (ethyl lactato)silane is superior in the human health and environment aspects as compared with the prior art RTV silicone rubber composition of oxime release type. It is also described that the composition is amenable to working because the odor is weak and not disgustful as compared with the prior art cure type. In Patent Document 1, the RTV silicone rubber composition is constructed to find application as sealant and to take a long cure time. The long cure time makes it difficult for the composition to find applications other than the sealant. There is still room for improvement. No reference is made to adhesion, working efficiency, and moisture resistance which is essential in the electric/electronic application.

Patent Document 2 (JP-A 2018-515634) discloses a composition comprising a hydroxy-containing polyorganosiloxane, a lactate-containing silane compound, an aminosilane, and a tin compound as essential components. Patent Document 2 refers to a cured product in which the aminosilane and the tin compound are used in a specific weight ratio and describes that the composition has satisfactory storage stability. Since adhesion and durability as rubber are described nowhere, it is unclear whether the composition is applicable to a wide range of application. WO 2019/ 069706 discloses a RTV organopolysiloxane compositions.

### PRIOR ART DOCUMENTS

### PATENT DOCUMENTS

Patent Document 1: JP 5399392
Patent Document 2: JP-A 2018-515634

### SUMMARY OF INVENTION

### TECHNICAL PROBLEM

An object of the invention is to provide a room temperature vulcanizable (RTV) silicone rubber composition of lactate release type comprising an organopolysiloxane having hydrolyzable silyl groups at ends of the molecular chain as a main component or base polymer in combination with a lactato-silane capable of releasing a lactate (lactic acid ester) as a crosslinker, the composition curing into a cured product or silicone rubber having excellent safety, low odor, adhesion, and curability as well as satisfactory moisture resistance; a silicone rubber comprising a cured product of the composition; and an article which is coated, sealed, secured or bonded by a cured product of the composition.

### SOLUTION TO PROBLEM

Making extensive investigations to attain the above object, the inventors have found that the above object is achievable by a RTV silicone rubber composition which is constructed by using an organopolysiloxane having hydrolyzable silyl groups at ends of the molecular chain as a main component or base polymer, combining a lactato-silane capable of releasing a lactate as a crosslinker therewith, and blending a specific cure accelerator. The invention is predicated on this finding.

The invention provides a RTV silicone rubber composition, a silicone rubber comprising a cured product of the composition, and an article which is coated, sealed, secured or bonded by a cured product of the composition, as defined below.
[1] A room temperature vulcanizable organopolysiloxane composition comprising
   (A) 100 parts by weight of an organopolysiloxane having the general formula (1): 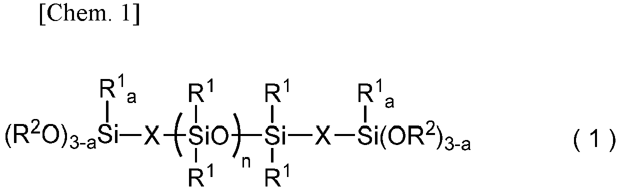 wherein R¹ is independently a C₁-C₁₀ unsubstituted or halogen-substituted monovalent hydrocarbon group, n is an integer of at least 10, X is oxygen or a C₁-C₄ alkylene group, R² is independently a C₁-C₆ unsubstituted or substituted monovalent hydrocarbon group, and a is 0 or 1 for each bonding silicon atom,
   (B) 0.1 to 30 parts by weight of a hydrolyzable (organo)silane compound having the general formula (2) and/or a partial hydrolytic condensate thereof, 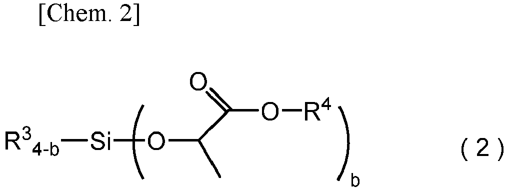 wherein R³ and R⁴ are each independently a C₁-C₁₀ unsubstituted or halogen-substituted monovalent hydrocarbon group, and b is 3 or 4,
   (C) 0.1 to 10 parts by weight of an amino-containing hydrolyzable organosilane compound and/or a partial hydrolytic condensate thereof,
   (D) 1 to 800 parts by weight of an inorganic filler, and
   (E) 0.001 to 15 parts by weight of a curing catalyst.
[2] The RTV organopolysiloxane composition of [1] wherein component (C) is a γ-aminopropyltrialkoxysilane or N-β-(aminoethyl)-γ-aminopropyltrialkoxysilane.
[3] The RTV organopolysiloxane composition of [1] wherein component (C) is selected from amino-containing hydrolyzable organosilane compounds having the general formulae (3), (4) and (5) and/or partial hydrolytic condensates thereof,

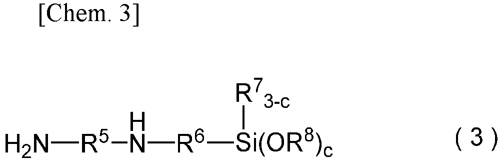

   Y=N-Z-SiR₃ (4)

   Y-NH-Z-SiR₃ (5)

   wherein R⁵ is a C₇-C₁₀ divalent hydrocarbon group containing an alkylene moiety and an aromatic ring, with the proviso that at least one of the primary and secondary amines is not directly attached to the aromatic ring in R⁵, R⁶ is a C₁-C₁₀ divalent hydrocarbon group, R⁷ is a C₁-C₁₀ unsubstituted monovalent hydrocarbon group, R⁸ is independently a C₁-C₁₀ unsubstituted or substituted monovalent hydrocarbon group, c is 2 or 3, Y is a C₁-C₁₅ mono- or divalent hydrocarbon group containing at least two nitrogen atoms in its structure, Z is a C₁-C₁₀ unsubstituted or substituted divalent hydrocarbon group which may contain a heteroatom, R is a monovalent group of at least one type selected from C₁-C₆ hydrolyzable groups and C₁-C₆ monovalent hydrocarbon groups, at least two of the three groups R bonding to the silicon atom are hydrolyzable groups.
[4] The RTV organopolysiloxane composition of any one of [1] to [3] wherein component (E) is an organotin compound or organotitanium compound.
[5] A silicone rubber comprising a cured product of the RTV organopolysiloxane composition of any one of [1] to [4].
[6] An article which is coated, sealed, secured or bonded by a cured product of the RTV organopolysiloxane composition of any one of [1] to [4].

### ADVANTAGEOUS EFFECTS OF INVENTION

According to the invention, the RTV organopolysiloxane composition which is constructed by using an organopolysiloxane having hydrolyzable silyl groups at ends of the molecular chain as a main component or base polymer, combining a lactato-silane capable of releasing a lactate as a crosslinker therewith, and blending a specific cure accelerator, cures into a cured product or silicone rubber having excellent safety, low odor, adhesion, and curability, as well as satisfactory moisture resistance even though it is a RTV silicone rubber composition of lactate release type.

### DESCRIPTION OF EMBODIMENTS

Now the invention is described in detail.

### [Component (A)]

Component (A) in the organopolysiloxane composition of the invention serves as a main component or base polymer in the composition. It is a linear organopolysiloxane capped at both ends of the molecular chain with hydrolyzable silyl groups each having two or three silicon-bonded organooxy groups, having the general formula (1). 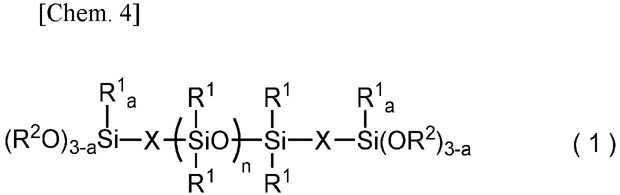 Herein R¹ is independently a C₁-C₁₀ unsubstituted or halogen-substituted monovalent hydrocarbon group, n is an integer of at least 10, X is oxygen or a C₁-C₄ alkylene group, R² is independently a C₁-C₆ unsubstituted or substituted monovalent hydrocarbon group, and "a" is 0 or 1 for each bonding silicon atom.

In formula (1), R¹ is a C₁-C₁₀, preferably C₁-C₆ unsubstituted or halogen-substituted monovalent hydrocarbon group. Examples include alkyl groups such as methyl, ethyl and propyl, cycloalkyl groups such as cyclohexyl, alkenyl groups such as vinyl and allyl, aryl groups such as phenyl and tolyl, and substituted forms of the foregoing in which some hydrogen is substituted by halogen, such as 3,3,3-trifluoropropyl. Inter alia, methyl is most preferred. A plurality of R¹ may be the same or different.

In formula (1), n is an integer of at least 10, typically an integer of 10 to 2,000, preferably 20 to 1,500, more preferably 30 to 1,000, even more preferably 50 to 800. The value of n is desirably such that the diorganopolysiloxane as component (A) may have a viscosity at 25°C in the range of 25 to 500,000 mPa·s, preferably 500 to 100,000 mPa s.

It is noted that n is the number of repeating difunctional diorganosiloxane units ((R¹)₂SiO_{2/2}) of which the backbone of the diorganopolysiloxane as component (A) is composed and indicative of a degree of polymerization, which may be typically determined as a number average degree of polymerization or number average molecular weight by gel permeation chromatography (GPC) versus polystyrene standards using toluene or the like as developing solvent. Also, the viscosity is typically measured at 25°C by a rotational viscometer (e.g., BL, BH, BS or cone plate type, or rheometer).

In formula (1), X is oxygen or a C₁-C₄ alkylene group. Examples of the C₁-C₄ alkylene group include straight alkylene groups such as methylene, ethylene, propylene and butylene, and isomers thereof such as isopropylene and isobutylene. X is preferably ethylene.

It is quite versatile that X is ethylene because the desired organopolysiloxane can be readily synthesized by effecting addition reaction of a corresponding hydrosilane to α,ω-divinyl-terminated polyorganosiloxane in the presence of a metal catalyst.

In formula (1), R² is independently a C₁-C₆ unsubstituted or substituted monovalent hydrocarbon group. Examples include alkyl groups such as methyl, ethyl and propyl, alkoxy-substituted alkyl groups such as methoxymethyl, methoxyethyl, ethoxymethyl and ethoxyethyl, cycloalkyl groups such as cyclohexyl, alkenyl groups such as vinyl, allyl, and propenyl, and phenyl. Inter alia, methyl is most preferred.

The subscript "a" is 0 or 1 for each bonding silicon atom.

### [Component (B)]

Component (B) in the organopolysiloxane composition of the invention is a hydrolyzable (organo)silane compound (or lactato-silane compound) having the general formula (2) and/or a partial hydrolytic condensate thereof. It functions as a crosslinker or curing agent which causes the diorganopolysiloxane as component (A) or base polymer to crosslink or cure through condensation reaction with two or three hydrolyzable silyl groups (silicon-bonded organooxy groups) at each end of the diorganopolysiloxane while releasing a lactate. 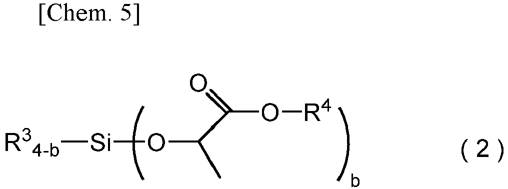 Herein R³ and R⁴ are each independently a C₁-C₁₀ unsubstituted or halogen-substituted monovalent hydrocarbon group, and b is 3 or 4.

In formula (2), R³ and R⁴ each are a C₁-C₁₀, preferably C₁-C₆ unsubstituted or halogen-substituted monovalent hydrocarbon group. Examples include alkyl groups such as methyl, ethyl and propyl, cycloalkyl groups such as cyclohexyl, alkenyl groups such as vinyl and allyl, aryl groups such as phenyl and tolyl, and substituted forms of the foregoing in which some hydrogen is substituted by halogen, such as 3,3,3-trifluoropropyl. Of these, methyl, ethyl and vinyl are preferred. R³ and R⁴ may be the same or different.

The subscript b is 3 or 4.

Also, the methine carbon bound by methyl in formula (2) can be an asymmetric center, and any of (R), (S) and racemic configurations may be assumed.

Examples of component (B) include silane compounds such as methyltris(ethyl lactato)silane, vinyltris(ethyl lactato)silane, ethyltris(ethyl lactato)silane, n-propyltris(ethyl lactato)silane, n-butyltris(ethyl lactato)silane, methyltris(methyl lactato)silane, vinyltris(methyl lactato)silane, ethyltris(methyl lactato)silane, n-propyltris(methyl lactato)silane, n-butyltris(methyl lactato)silane, methyltris(n-propyl lactato)silane, vinyltris(n-propyl lactato)silane, ethyltris(n-propyl lactato)silane, n-propyltris(n-propyl lactato)silane, and n-butyltris(n-propyl lactato)silane, as well as partial hydrolytic condensates thereof.

It is noted that the "partial hydrolytic condensate" as used herein refers to an organosiloxane oligomer having at least two, preferably at least three residual hydrolyzable silyl groups in the molecule, created by partial hydrolytic condensation of a hydrolyzable organosilane compound as component (B).

Of the foregoing, preference is given to methyltris(ethyl lactato)silane, vinyltris(ethyl lactato)silane, methyltris(methyl lactato)silane, and vinyltris(methyl lactato)silane, with methyltris(ethyl lactato)silane and vinyltris(ethyl lactato)silane being more preferred.

Component (B) may be used alone or in admixture.

The amount of component (B) blended is 0.1 to 30 parts by weight, preferably 0.5 to 20 parts by weight, more preferably 1 to 15 parts by weight per 100 parts by weight of component (A). With less than 0.1 part by weight of component (B), it is difficult to obtain a silicone rubber cured product having the desired rubber elasticity. In excess of 30 parts by weight, the resulting cured product has shortcomings including a likelihood to lose mechanical properties, a retarded cure speed, and cost detriment.

### [Component (C)]

Component (C) is an amino-containing hydrolyzable organosilane compound and/or a partial hydrolytic condensate thereof. It functions as a cure accelerator for promoting condensation reaction of component (A) with component (B) and also as a tackifier or adhesive aid for improving the adhesion of the cured product or silicone rubber to various substrates.

The amino-containing hydrolyzable organosilane compound (amino functional group-containing carbon-functional silane or amino-functional silane coupling agent) as component (C) is advantageously selected from well-known compounds, for example, terminal amino functional group-substituted alkyl group-containing alkoxysilanes, e.g., N-β-(aminoethyl)-γ-aminopropyltrialkoxysilanes such as N-β-(aminoethyl)-γ-aminopropyltrimethoxysilane and N-β-(aminoethyl)-y-aminopropyltriethoxysilane, and γ-aminopropyltrialkoxysilanes such as γ-aminopropyltrimethoxysilane and γ-aminopropyltriethoxysilane. Of these, γ-aminopropyltriethoxysilane and N-β-(aminoethyl)-γ-aminopropyltrimethoxysilane are preferred.

Also useful are amino-containing hydrolyzable organosilane compounds (amino functional group-containing carbon-functional silanes or amino-functional silane coupling agents) having the general formulae (3), (4) and (5) and/or partial hydrolytic condensates thereof.

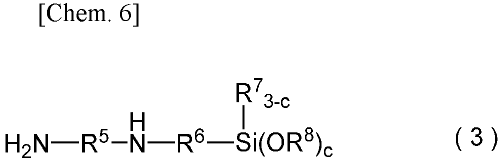

Y=N-Z-SiR₃ (4)

Y-NH-Z-SiR₃ (5)

Herein R⁵ is a C₇-C₁₀ divalent hydrocarbon group containing an alkylene moiety and an aromatic ring, with the proviso that at least one of the primary and secondary amines is not directly attached to the aromatic ring in R⁵. R⁶ is a C₁-C₁₀ divalent hydrocarbon group, R⁷ is a C₁-C₁₀ unsubstituted monovalent hydrocarbon group, R⁸ is independently a C₁-C₁₀ unsubstituted or substituted monovalent hydrocarbon group, and c is 2 or 3. Y is a C₁-C₁₅ mono- or divalent hydrocarbon group containing at least two nitrogen atoms in its structure. Z is a C₁-C₁₀ unsubstituted or substituted divalent hydrocarbon group which may contain a heteroatom. R is a monovalent group of at least one type selected from C₁-C₆ hydrolyzable groups and C₁-C₆ monovalent hydrocarbon groups, at least two of the three groups R bonding to the silicon atom are hydrolyzable groups.

Reference is first made to the amino-containing hydrolyzable organosilane compound having formula (3) and/or partial hydrolytic condensate thereof. This amino-containing hydrolyzable organosilane has the structure that an aromatic ring intervenes between primary and secondary amine moieties and at least one of the amine moieties is not directly attached to the aromatic ring, as described in detail in JP-A H05-105689.

In formula (3), R⁵ is a C₇-C₁₀ divalent hydrocarbon group containing an alkylene moiety and aromatic ring, preferably a combination of a phenylene group (-C₆H₄-) with a C₁-C₄ alkylene group such as methylene, ethylene or trimethylene, for example, groups having the following formulae.

-CH₂-C₆H₄-

-CH₂-C₆H₄-CH₂-

-CH₂-C₆H₄-CH₂-CH₂-

-CH₂-C₆H₄-CH₂-CH₂-CH₂-

-CH₂-CH₂-C₆H₄-

-CH₂-CH₂-C₆H₄-CH₂-

-CH₂-CH₂-C₆H₄-CH₂-CH₂-

-CH₂-CH₂-CH₂-C₆H₄-

-CH₂-CH₂-CH₂-C₆H₄-CH₂-

Of these, -CH₂-C₆H₄-CH₂- is most preferred.

R⁶ is a C₁-C₁₀, preferably C₁-C₆ divalent hydrocarbon group. Examples include alkylene groups such as methylene, ethylene, propylene, tetramethylene, hexamethylene, octamethylene, decamethylene, and 2-methylpropylene, arylene groups such as phenylene, and combinations of such an alkylene group with an arylene group, preferably C₁-C₄ alkylene groups.

R⁷ is a C₁-C₁₀, preferably C₁-C₆ unsubstituted monovalent hydrocarbon group. R⁸ is independently a C₁-C₁₀, preferably C₁-C₆ unsubstituted or substituted monovalent hydrocarbon group. Examples of the unsubstituted monovalent hydrocarbon groups R⁷ and R⁸ include alkyl groups such as methyl, ethyl, propyl, isopropyl, butyl, isobutyl, tert-butyl, hexyl, 2-ethylhexyl and octyl, cycloalkyl groups such as cyclohexyl, alkenyl groups such as vinyl, allyl and propenyl, and aryl groups such as phenyl and tolyl. Examples of the substituted monovalent hydrocarbon group R⁸ include alkoxy-substituted alkyl groups such as methoxymethyl, methoxyethyl, ethoxymethyl and ethoxyethyl. R⁷ is preferably methyl, vinyl or phenyl, more preferably methyl. R⁸ is preferably a C₁-C₄ alkyl group, more preferably methyl or ethyl.

Examples of the amino-containing hydrolyzable organosilane compound having formula (3) include those having the following formulae. Notably, Me stands for methyl, and Et for ethyl.

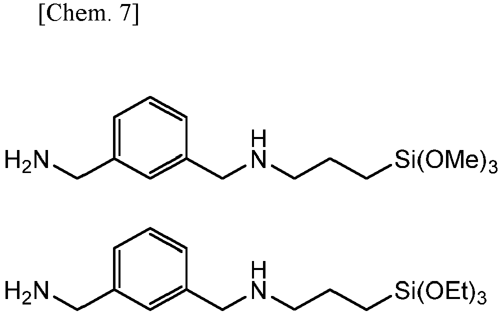

Next, the amino-containing hydrolyzable organosilane compounds having formulae (4) and (5) and/or partial hydrolytic condensates thereof are organosilanes containing at least 3, preferably 3 to 6, more preferably 3 to 5 nitrogen atoms per molecule and having a mono- or divalent basic site (Y) capable of developing an end-blocking catalyst function.

In formula (4) or (5), the mono- or divalent basic site Y capable of developing an end-blocking catalyst function is a C₁-C₁₅, preferably C₁-C₁₀ mono- or divalent hydrocarbon group containing at least 2, preferably 2 to 5, more preferably 2 to 4 nitrogen atoms in the structure. Of the basic sites Y, the divalent group is exemplified by a strongly basic group such as an unsubstituted or N-substituted guanidyl group having the formula (6), and the monovalent group is exemplified by a strongly basic group such as an unsubstituted or N-substituted guanidyl group having the formula (7). In the formulae, the wavy line designates a point(s) of attachment to the nitrogen atom.

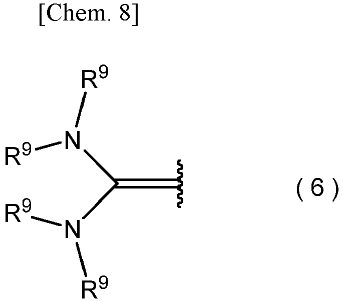

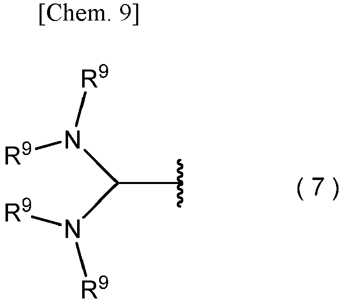

In formulae (6) and (7), R⁹ is each independently selected from hydrogen and C₁-C₁₀ straight, branched or cyclic alkyl, alkenyl and aryl groups, for example, alkyl groups such as methyl, ethyl and propyl, cycloalkyl groups such as cyclohexyl, alkenyl groups such as vinyl and allyl, and aryl groups such as phenyl and tolyl. Of these, methyl, ethyl and phenyl are preferred, with methyl being most preferred. R⁹ may be the same or different.

In formula (4) or (5), Z is a C₁-C₁₀, preferably C₃-C₆ unsubstituted or substituted divalent hydrocarbon group which may contain a heteroatom such as oxygen or nitrogen, typically a straight, branched or cyclic alkylene, alkenylene or arylene group, or a combination thereof. Examples include alkylene groups such as methylene, ethylene, propylene, tetramethylene, hexamethylene, octamethylene, decamethylene, 2-methylpropylene, arylene groups such as phenylene, combinations of such an alkylene group with an arylene group, and alkylene groups having an intervening ketone, ester or amide bond. Of these, methylene, ethylene, propylene, and propylene having an intervening amide bond are preferred, with propylene being most preferred.

In formula (4) or (5), R is a monovalent group of at least one type which is selected from C₁-C₆, preferably C₁-C₄ hydrolyzable groups (i.e., a group capable of bonding to a silicon atom to form a Si-O-C linkage), for example, alkoxy groups such as methoxy, ethoxy, propoxy, isopropoxy, butoxy, isobutoxy, tert-butoxy, alkoxy-substituted alkyl groups such as methoxymethyl, methoxyethyl, ethoxymethyl, ethoxyethyl, alkenyloxy groups such as vinyloxy, allyloxy, propenoxy, isopropenoxy, ketoxime groups such as dimethylketoxime, diethylketoxime, methylethylketoxime, and acyloxy groups such as acetoxy, and C₁-C₆, preferably C₁-C₄ monovalent hydrocarbon groups, for example, alkyl groups such as methyl and ethyl, alkenyl groups such as vinyl, and aryl groups such as phenyl. Of the three silicon-bonded groups R, at least two, preferably three groups R are hydrolyzable groups.

Examples of the hydrolyzable silyl group (-SiR₃) include alkoxysilyl groups such as trimethoxysilyl, methyldimethoxysilyl, vinyldimethoxysilyl, phenyldimethoxysilyl, and triethoxysilyl, isopropenoxysilyl groups such as triisopropenoxysilyl, methyldiisopropenoxysilyl, ethyldiisopropenoxysilyl, vinyldiisopropenoxysilyl, and phenyldiisopropenoxysilyl, and ketoximesilyl groups such as tris(dimethylketoxime)silyl, tris(diethylketoxime)silyl, and tris(ethylmethylketoxime)silyl.

Examples of the amino-containing hydrolyzable organosilane compound having formula (4) include those having the following formulae (8) to (13). Examples of the amino-containing hydrolyzable organosilane compound having formula (5) include those having the following formulae (14) to (16). Notably, Me stands for methyl, Et for ethyl, and Ph for phenyl.

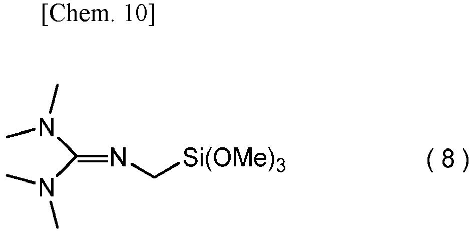

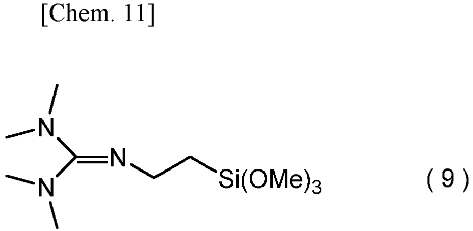

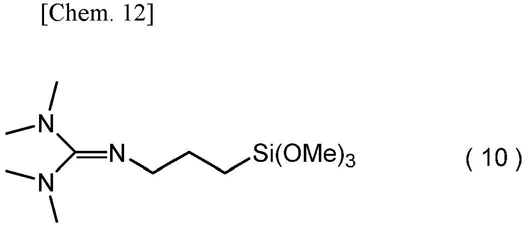

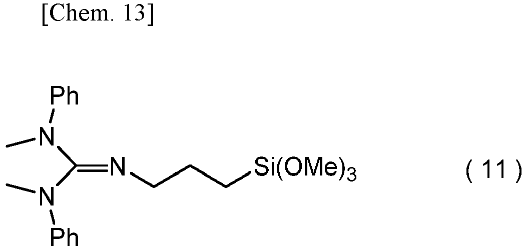

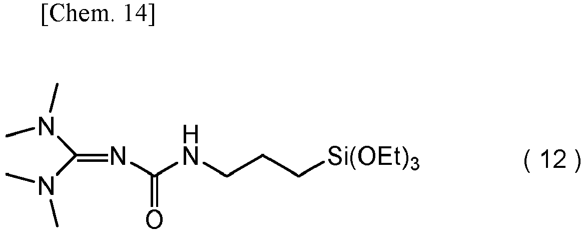

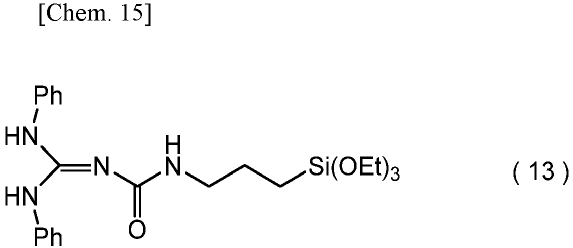

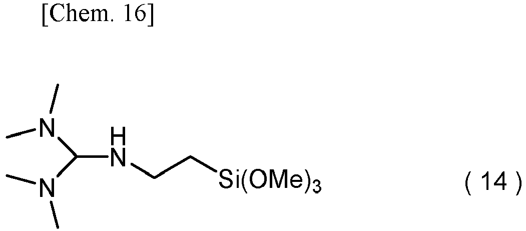

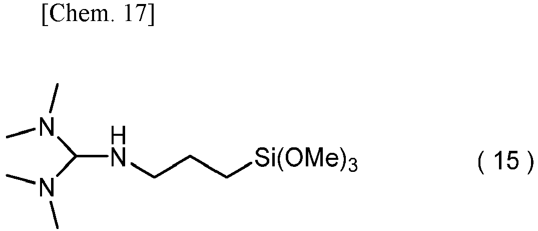

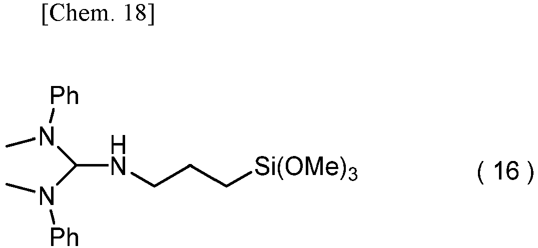

Of these, preference is given to N-methyl-substituted guanidyl-containing trimethoxysilanes having formulae (8), (9) and (10), more preferably N,N,N',N'-tetramethyl-N"-[3-(trimethoxysilyl)propyl]guanidine having formula (10).

The amount of component (C) blended is 0.1 to 10 parts by weight, preferably 0.1 to 5 parts by weight, more preferably 0.1 to 3 parts by weight per 100 parts by weight of component (A). If the amount of component (C) is less than 0.1 part by weight, adhesion declines, or cure is not fully promoted particularly when the compound of formula (4) or (5) is used. More than 10 parts by weight of component (C) causes cost detriment and the resulting composition loses shelf stability.

### [Component (D)]

Component (D) is an inorganic filler which is added for the purpose of enhancing the strength, thixotropy or the like of the composition. Examples include reinforcing or non-reinforcing silica base fillers such as ground silica, fused silica, spherical silica, fumed silica (or dry silica), wet silica (precipitated silica, sol-gel silica), crystalline silica (finely divided quartz), and diatomaceous earth; aluminum hydroxide, alumina, boehmite, magnesium hydroxide, magnesium oxide, calcium hydroxide, calcium carbonate, zinc carbonate, basic zinc carbonate, zinc oxide, titanium oxide, carbon black, glass beads, glass balloons, and Shirasu balloons, which may be used alone or in combination of two or more. The inorganic filler may or may not be surface treated with any well-known treating agents. The well-known treating agents are preferably hydrolyzable group-containing methylpolysiloxanes as described in JP 3543663, for example, but not limited thereto.

The amount of component (D) blended is 1 to 800 parts by weight, preferably 1 to 600 parts by weight, more preferably 1 to 500 parts by weight per 100 parts by weight of component (A). If the amount of component (D) is less than 1 part by weight, the cured product has poor mechanical properties. More than 800 parts by weight of component (D) makes it difficult to formulate a RTV organopolysiloxane composition having rubber elasticity.

### [Component (E)]

Component (E) is a curing catalyst. Examples include organic carboxylic acid salts and alkoxides of metals such as tin, titanium, zirconium, iron, antimony, bismuth and manganese; organic titanates and organic titanium chelates. Specific examples include tin compounds such as dibutyltin dilaurate, dibutyltin dioctoate, dioctyltin dilaurate, dibutyltin maleate, dimethyltin dineodecanoate, dibutyltin dimethoxide, dioctyltin dineodecanoate, and stannous octoate; titanium compounds such as tetrabutyl titanate, diisopropoxybis(acetylacetonato)titanium, and diisopropoxybis(ethylacetoacetate)titanium; amine compounds and salts thereof such as dibutylamine, laurylamine, tetramethylguanidine, and tetramethylguanidylpropyltrimethoxysilane. It is preferred to add organotin compounds and organotitanium compounds because the inventive composition is improved in curing properties such as fast cure and depth cure, with dialkyltin dialkoxides and dialkyltin dicarboxylates being especially preferred.

Component (E) may be used alone or in admixture.

The amount of component (E) added is 0.001 to 15 parts by weight, preferably 0.001 to 10 parts by weight, more preferably 0.01 to 5 parts by weight per 100 parts by weight of component (A). If the amount of component (E) is less than 0.001 part by weight, the resulting composition is not fully crosslinkable. More than 15 parts by weight of component (E) leads to shortcomings such as cost detriment and a slow curing speed.

### [Other components]

In addition to the foregoing components, any well-known additives may be added to the inventive RTV organopolysiloxane composition as long as the object of the invention is not compromised. Exemplary additives include thixotropy improvers such as polyethers, plasticizers such as non-reactive dimethylsilicone oil (e.g., linear dimethylpolysiloxane capped at both ends of the molecular chain with trimethylsilyl groups, known as nonfunctional dimethylsilicone oil) and isoparaffin, crosslinking density improvers such as three-dimensional network polysiloxane resins composed of trimethylsiloxy units and SiO₂ units.

If necessary, there may be added coloring agents such as pigments, dyes and fluorescent brighteners, mildew-proofing agents, antibacterial agents, bleed oils such as non-reactive phenylsilicone oil and fluorosilicone oil, surface modifiers such as silicone-incompatible organic liquids, and solvents such as toluene, xylene, gasoline, cyclohexane, methylcyclohexane, and low-boiling isoparaffin.

The RTV organopolysiloxane composition of the invention may be obtained by mixing predetermined amounts of the foregoing components (A) to (E) and if necessary, other components in a dry atmosphere until uniform.

The resulting RTV organopolysiloxane composition cures while it is allowed to stand at room temperature (25±10°C). The molding method and curing conditions may be selected from well-known methods and conditions depending on the type of the composition.

Since the RTV organopolysiloxane composition of the invention cures into a cured product or silicone rubber having excellent safety, low odor, adhesion, and curability as well as improved moisture resistance, the composition is useful as coating agents, sealants, securing agents, adhesives or the like.

An article or substrate is coated with, sealed, secured or bonded by a cured product of the RTV organopolysiloxane composition. Although the article or substrate is not particularly limited, the composition is advantageously applicable to substrates for electric and electronic application (e.g., circuit boards) and for securing or potting electronic parts.

### EXAMPLES

Examples and Comparative Examples are given below for illustrating the invention, but the invention is not limited thereto. The viscosity is measured by a rotational viscometer, and DOP is a number average degree of polymerization as measured by GPC using toluene as developing solvent versus polystyrene standards.

### [Example 1]

A base mixture was prepared by mixing and stirring 80 parts by weight of dimethylpolysiloxane capped with trimethoxysilyl groups at both ends of the molecular chain and having a viscosity of 30,000 mPa·s at 25°C, represented by formula (1) wherein X is an ethylene group (-CH₂CH₂-), R¹ and R² each are methyl, a = 0, and n = ~750, 20 parts by weight of linear dimethylpolysiloxane capped with trimethylsilyl groups at both ends of the molecular chain and having a viscosity of 300 mPa·s at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.3 part by weight of N-β-(aminoethyl)-γ-aminopropyltrimethoxysilane under atmospheric pressure for 15 minutes until uniform. Next, 0.2 part by weight of dioctyltin dineodecanoate was added to the mixture, which was mixed and stirred under reduced pressure for 15 minutes until uniform, obtaining Composition 1.

### [Example 2]

A base mixture was prepared by mixing and stirring 80 parts by weight of dimethylpolysiloxane capped with trimethoxysilyl groups at both ends of the molecular chain and having a viscosity of 30,000 mPa·s at 25°C, represented by formula (1) wherein X is an ethylene group (-CH₂CH₂-), R¹ and R² each are methyl, a = 0, and n = ~750, 20 parts by weight of linear dimethylpolysiloxane capped with trimethylsilyl groups at both ends of the molecular chain and having a viscosity of 300 mPa·s at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.4 part by weight of γ-aminopropyltriethoxysilane under atmospheric pressure for 15 minutes until uniform. Next, 0.2 part by weight of dioctyltin dineodecanoate was added to the mixture, which was mixed and stirred under reduced pressure for 15 minutes until uniform, obtaining Composition 2.

### [Example 3]

A base mixture was prepared by mixing and stirring 80 parts by weight of dimethylpolysiloxane capped with trimethoxysilyl groups at both ends of the molecular chain and having a viscosity of 30,000 mPa·s at 25°C, represented by formula (1) wherein X is an ethylene group (-CH₂CH₂-), R¹ and R² each are methyl, a = 0, and n = ~750, 20 parts by weight of linear dimethylpolysiloxane capped with trimethylsilyl groups at both ends of the molecular chain and having a viscosity of 300 mPa·s at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.4 part by weight of amino-containing trimethoxysilane compound having the following formula (17) under atmospheric pressure for 15 minutes until uniform. Next, 0.2 part by weight of dioctyltin dineodecanoate was added to the mixture, which was mixed and stirred under reduced pressure for 15 minutes until uniform, obtaining Composition 3.

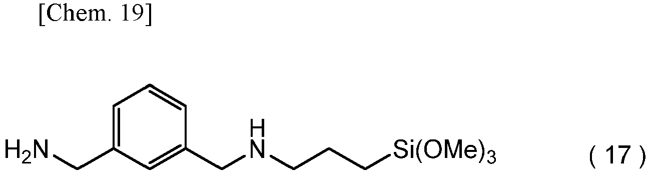

### [Example 4]

A base mixture was prepared by mixing and stirring 80 parts by weight of dimethylpolysiloxane capped with trimethoxysilyl groups at both ends of the molecular chain and having a viscosity of 30,000 mPa·s at 25°C, represented by formula (1) wherein X is an ethylene group (-CH₂CH₂-), R¹ and R² each are methyl, a = 0, and n = ~750, 20 parts by weight of linear dimethylpolysiloxane capped with trimethylsilyl groups at both ends of the molecular chain and having a viscosity of 300 mPa·s at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.4 part by weight of amino-containing trimethoxysilane compound having the following formula (18) under atmospheric pressure for 15 minutes until uniform. Next, 0.2 part by weight of dioctyltin dineodecanoate was added to the mixture, which was mixed and stirred under reduced pressure for 15 minutes until uniform, obtaining Composition 4.

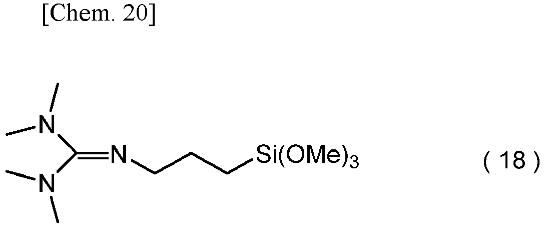

### [Example 5]

A base mixture was prepared by mixing and stirring 80 parts by weight of dimethylpolysiloxane capped with trimethoxysilyl groups at both ends of the molecular chain and having a viscosity of 30,000 mPa·s at 25°C, represented by formula (1) wherein X is an ethylene group (-CH₂CH₂-), R¹ and R² each are methyl, a = 0, and n = ~750, 20 parts by weight of linear dimethylpolysiloxane capped with trimethylsilyl groups at both ends of the molecular chain and having a viscosity of 300 mPa·s at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.4 part by weight of N-β-(aminoethyl)-γ-aminopropyltrimethoxysilane under atmospheric pressure for 15 minutes until uniform. Next, 3 parts by weight of diisopropoxytitanium bis(ethyl acetoacetate) was added to the mixture, which was mixed and stirred under reduced pressure for 15 minutes until uniform, obtaining Composition 5.

### [Comparative Example 1]

Composition 6 was obtained by similarly mixing the same components as in Example 1 aside from using 80 parts by weight of dimethylpolysiloxane capped with silanol groups (i.e., silicon-bonded hydroxy groups) at both ends of the molecular chain and having a viscosity of 20,000 mPa·s at 25°C, instead of 80 parts by weight of dimethylpolysiloxane capped with trimethoxysilyl groups at both ends of the molecular chain and having a viscosity of 30,000 mPa·s at 25°C, represented by formula (1) wherein X is an ethylene group (-CH₂CH₂-), R¹ and R² each are methyl, a = 0, and n = ~750.

### [Comparative Example 2]

A base mixture was prepared by mixing and stirring 80 parts by weight of dimethylpolysiloxane capped with silanol groups at both ends of the molecular chain and having a viscosity of 20,000 mPa·s at 25°C as a base polymer, 20 parts by weight of linear dimethylpolysiloxane capped with trimethylsilyl groups at both ends of the molecular chain and having a viscosity of 300 mPa's at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.8 part by weight of amino-containing trimethoxysilane compound having formula (17) under reduced pressure for 30 minutes until uniform. Next, 0.2 part by weight of dioctyltin dineodecanoate was added to the mixture, which was mixed and stirred under reduced pressure for 15 minutes until uniform, obtaining Composition 7.

### [Comparative Example 3]

A base mixture was prepared by mixing and stirring 80 parts by weight of dimethylpolysiloxane capped with silanol groups at both ends of the molecular chain and having a viscosity of 20,000 mPa·s at 25°C as a base polymer, 20 parts by weight of linear dimethylpolysiloxane capped with trimethylsilyl groups at both ends of the molecular chain and having a viscosity of 300 mPa·s at 25°C, and 10 parts by weight of fumed silica having a BET specific surface area of 130 m²/g for 20 minutes until uniform. The base mixture was then mixed and stirred with 5 parts by weight of methyltris(ethyl lactato)silane, 1.6 parts by weight of vinyltris(ethyl lactato)silane, and 0.8 part by weight of amino-containing trimethoxysilane compound having formula (17) under reduced pressure for 30 minutes until uniform. Next, 3 parts by weight of diisopropoxytitanium bis(ethyl acetoacetate) was added to the mixture, which was mixed and stirred under reduced pressure for 15 minutes until uniform, obtaining Composition 8.

Compositions 1 to 8 thus prepared were evaluated for the following properties.

### · Tack-free time measured according to JIS K 6249

### · Cure

Each of Compositions 1 to 8 prepared above was allowed to stand in a 23°C/50% RH environment for 7 days, during which it cured to a thickness of 3 mm. Hardness (Durometer Type A) was measured according to JIS K 6249.

### · Cure speed

Each of Compositions 1 to 8 was placed in a glass dish of diameter 10 mm and height 13 mm and allowed to stand in a 23°C/50% RH environment for 1 day. After 1 day, the rubber which had cured from the surface in a depth direction was bored and the thickness (mm) of the cured section was measured.

### · Adhesion

An adherend (aluminum as metal, PA66 or epoxy as resin, or glass) was cleaned with ethanol, after which each of Compositions 1 to 8 was applied thereto in bead form. The composition was allowed to stand in a 23°C/50% RH environment for 7 days. A simple test was carried out to examine whether or not the composition bonded to the adherend. Specifically, the test method included using a cutter knife to make an incision along the interface between the adherend and the cured product or silicone rubber of 3 mm thick obtained from curing of each of Compositions 1 to 8, pulling the cured product or silicone rubber in a horizontal direction relative to the adherend, and inspecting whether or not the cured product bonded to the adherend.

In the test, the adhesion to the adherend was evaluated according to the following criteria.
∘: tightly bonded to the adherend (cohesive failure throughout the bead)
△: partly peeled from the adherend (interfacial peeling over 1/2 or more of the overall bead)
×: not bonded to the adherend (interfacial peeling throughout the bead)

### · Storage stability

Each of Compositions 1 to 8 was placed in a tightly closable vessel of polyethylene, which was allowed to stand in an oven at 70°C. Thereafter, the composition was cured and measured for hardness according to the above-described cure test.

### · Moisture resistance

Each of Compositions 1 to 8 was allowed to stand in a 23°C/50% RH environment for 7 days, during which it cured into a cured sample having a thickness of 3 mm. The cured sample was placed in a constant temperature/humidity chamber at 85°C and 85% RH for a predetermined time (250 hr, 500 hr, 750 hr, 1,000 hr), after which it was measured for hardness to examine a change.

### · Flash point

The flash point of Compositions 1 to 8 was measured according to JIS K 2265-2 using a Seta-series closed cup flash point tester of Stanhope-Seta.

The results are shown in Table 1.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Test item | | Composition 1 | Composition 2 | Composition 3 | Composition 4 | Composition 5 | Composition 6 | Composition 7 | Composition 8 |
| Tack-free time (min) | | 10 | 8 | 9 | 9 | 90 | 5 | 3 | >90 |
| Cure | Hardness | 19 | 20 | 22 | 22 | 12 | 20 | 21 | uncured |
| Cure speed | Thickness (mm) | 3.5 | 3.4 | 3.7 | 3.5 | 2.1 | 3.0 | 3.2 | Unmeasurable |
| Adhesion | Aluminum | ○ | ○ | ○ | ○ | ○ | ○ | ○ | × |
| | PA 66 | ○ | ○ | ○ | ○ | ○ | × | ○ | × |
| | Epoxy resin | ○ | ○ | ○ | ○ | ○ | ○ | ○ | × |
| | Glass | ○ | ○ | ○ | ○ | ○ | Δ | ○ | × |
| Storage stability: Hardness | | 19 | 20 | 21 | 20 | 11 | 18 | 18 | Unmeasurable |
| Moisture resistance | 250 hr | 15 | 16 | 19 | 17 | 10 | 6 | 5 | Unmeasurable |
| | 500 hr | 19 | 19 | 18 | 18 | 9 | 10 | 11 | Unmeasurable |
| | 750 hr | 20 | 22 | 22 | 20 | 10 | 13 | 13 | Unmeasurable |
| | 1,000 hr | 22 | 23 | 23 | 22 | 13 | 13 | 14 | Unmeasurable |
| Flash point (°C) | | 92 | 92 | 94 | 93 | 90 | 94 | 92 | 90 |

Compositions 1 to 4 of Examples are good in cure, cure speed, and adhesion. Although a slight loss of moisture resistance after 250 hours was acknowledged, the hardness remained substantially equal to the initial value even after the lapse of 1,000 hours, suggesting that the compositions are satisfactory in moisture resistance. Also, the storage stability test showed a hardness comparable to the initial value, indicating that the compositions maintain consistent physical properties for a long period of time.

Although Compositions 6 and 7 of Comparative Examples are good in cure, cure speed, and adhesion, the hardness in the moisture resistance test dropped below one-half of the initial value within 250 hours. Also, Composition 8 did no longer cure after 7 day standing in 23°C/50% RH environment, and hence, the evaluation of physical properties was impossible.

It was confirmed that in contrast to Composition 8 of Comparative Example, Composition 5 of Example cures even when an organotitanium compound is used as the curing catalyst. Composition 5 displays satisfactory moisture resistance like the results of Compositions 1 to 4.

The inventive composition releases ethyl lactate with the progress of cure, indicating very high safety to the human body and environment. All the compositions have a flash point of at least 90°C, indicating low hazard.

The lactate esters themselves exist in the nature and are added to foods and perfumes. Low odor as compared with alcohols (methanol and ethanol) of the alcohol release type, oximes of the oxime release type, and acetic acid of the acetic acid release type constitutes another advantage.

## Claims

1. A room temperature vulcanizable organopolysiloxane composition comprising
(A) 100 parts by weight of an organopolysiloxane having the general formula (1): 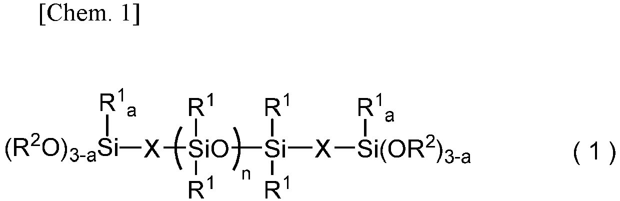 wherein R¹ is independently a C₁-C₁₀ unsubstituted or halogen-substituted monovalent hydrocarbon group, n is an integer of at least 10, X is oxygen or a C₁-C₄ alkylene group, R² is independently a C₁-C₆ unsubstituted or substituted monovalent hydrocarbon group, and a is 0 or 1 for each bonding silicon atom,
(B) 0.1 to 30 parts by weight of a hydrolyzable (organo)silane compound having the general formula (2) and/or a partial hydrolytic condensate thereof, 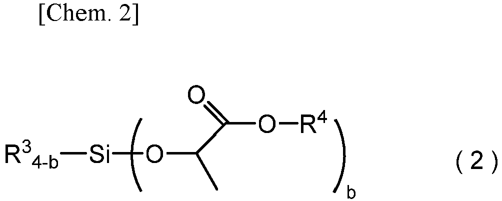 wherein R³ and R⁴ are each independently a C₁-C₁₀ unsubstituted or halogen-substituted monovalent hydrocarbon group, and b is 3 or 4,
(C) 0.1 to 10 parts by weight of an amino-containing hydrolyzable organosilane compound and/or a partial hydrolytic condensate thereof,
(D) 1 to 800 parts by weight of an inorganic filler, and
(E) 0.001 to 15 parts by weight of a curing catalyst.

2. The room temperature vulcanizable organopolysiloxane composition of claim 1 wherein component (C) is a γ-aminopropyltrialkoxysilane or N-β-(aminoethyl)-γ-aminopropyltrialkoxysilane.

3. The room temperature vulcanizable organopolysiloxane composition of claim 1 wherein component (C) is selected from amino-containing hydrolyzable organosilane compounds having the general formulae (3), (4) and (5) and/or partial hydrolytic condensates thereof, 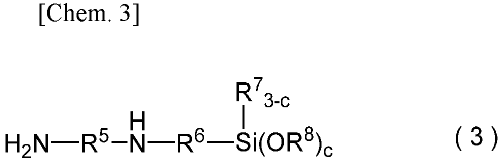
Y=N-Z-SiR₃ (4)
Y-NH-Z-SiR₃ (5)
wherein R⁵ is a C₇-C₁₀ divalent hydrocarbon group containing an alkylene moiety and an aromatic ring, with the proviso that at least one of the primary and secondary amines is not directly attached to the aromatic ring in R⁵, R⁶ is a C₁-C₁₀ divalent hydrocarbon group, R⁷ is a C₁-C₁₀ unsubstituted monovalent hydrocarbon group, R⁸ is independently a C₁-C₁₀ unsubstituted or substituted monovalent hydrocarbon group, c is 2 or 3, Y is a C₁-C₁₅ mono- or divalent hydrocarbon group containing at least two nitrogen atoms in its structure, Z is a C₁-C₁₀ unsubstituted or substituted divalent hydrocarbon group which may contain a heteroatom, R is a monovalent group of at least one type selected from C₁-C₆ hydrolyzable groups and C₁-C₆ monovalent hydrocarbon groups, at least two of the three groups R bonding to the silicon atom are hydrolyzable groups.

4. The room temperature vulcanizable organopolysiloxane composition of any one of claims 1 to 3 wherein component (E) is an organotin compound or organotitanium compound.

5. A silicone rubber comprising a cured product of the room temperature vulcanizable organopolysiloxane composition of any one of claims 1 to 4.

6. An article which is coated, sealed, secured or bonded by a cured product of the room temperature vulcanizable organopolysiloxane composition of any one of claims 1 to 4.

## Patentansprüche

1. Bei Raumtemperatur vulkanisierbare Organopolysiloxan-Zusammensetzung, die Folgendes umfasst:
(A) 100 Gewichtsteile eines Organopolysiloxans mit der allgemeinen Formel (1): 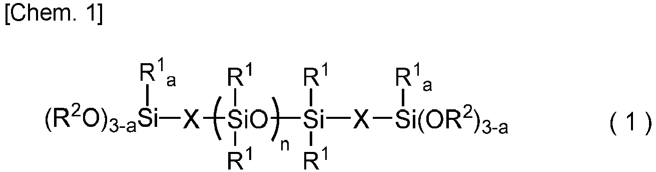 worin R¹ jeweils unabhängig eine unsubstituierte oder Halogen-substituierte einwertige C₁₋₁₀-Kohlenwasserstoffgruppe ist, n eine ganze Zahl von zumindest 10 ist, X Sauerstoff oder eine C₁₋₄-Alkylengruppe ist, R² jeweils unabhängig eine unsubstituierte oder substituierte einwertige C₁₋₆-Kohlenwasserstoffgruppe ist und a = 0 oder 1 für jedes bindende Siliciumatom ist,
(B) 0,1 bis 30 Gewichtsteile einer hydrolysierbaren (Organo-)Silan-Verbindung mit der allgemeinen Formel (2) und/oder eines partiellen hydrolytischen Kondensats davon, 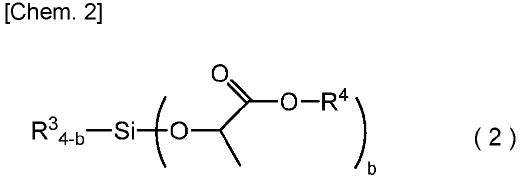 worin R³ und R⁴ jeweils unabhängig eine unsubstituierte oder Halogen-substituierte einwertige C₁₋₁₀-Kohlenwasserstoffgruppe sind und b = 3 oder 4 ist,
(C) 0,1 bis 10 Gewichtsteile einer aminohältigen hydrolysierbaren Organosilan-Verbindung und/oder eines partiellen hydrolytischen Kondensats davon,
(D) 1 bis 800 Gewichtsteile eines anorganischen Füllstoffs und
(E) 0,001 bis 15 Gewichtsteile eines Härtungskatalysators.

2. Bei Raumtemperatur vulkanisierbare Organopolysiloxan-Zusammensetzung nach Anspruch 1, worin Komponente (C) ein γ-Aminopropyltrialkoxysilan oder N-β-(Aminoethyl)-γ-aminopropyltrialkoxysilan ist.

3. Bei Raumtemperatur vulkanisierbare Organopolysiloxan-Zusammensetzung nach Anspruch 1, worin Komponente (C) aus aminohältigen hydrolysierbaren Organosilan-Verbindungen mit der allgemeinen Formel (3), (4) und (5) und/oder partiellen hydrolytischen Kondensaten davon ausgewählt ist, 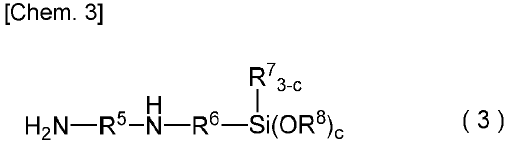
Y=N-Z-SiR₃ (4)
Y-NH-Z-SiR₃ (5)
worin R⁵ ein zweiwertige C₇₋₁₀-Kohlenwasserstoffgruppe ist, die eine Alkylengruppierung und einen aromatischen Ring enthält, mit der Maßgabe, dass zumindest eines der primären und sekundären Amine in R⁵ nicht direkt an den aromatischen Ring gebunden ist, R⁶ eine zweiwertige C₁₋₁₀-Kohlenwasserstoffgruppe ist, R⁷ eine unsubstituierte einwertige C₁₋₁₀-Kohlenwasserstoffgruppe ist, R⁸ jeweils unabhängig eine unsubstituierte oder substituierte einwertige C₁₋₁₀-Kohlenwasserstoffgruppe ist, c = 2 oder 3 ist, Y eine einwertige oder zweiwertige C₁₋₁₅-Kohlenwasserstoffgruppe ist, die in ihrer Struktur zumindest zwei Stickstoffatome enthält, Z eine unsubstituierte oder substituierte zweiwertige C₁₋₁₀-Kohlenwasserstoffgruppe ist, die gegebenenfalls ein Heteroatom enthält, R eine einwertige Gruppe zumindest eines Typs, ausgewählt aus hydrolysierbaren C₁₋₆-Gruppen und einwertigen C₁₋₆-Kohlenwasserstoffgruppen ist, wobei zumindest zwei der drei Gruppen R, die an das Silicium gebunden sind, hydrolysierbare Gruppen sind.

4. Bei Raumtemperatur vulkanisierbare Organopolysiloxan-Zusammensetzung nach einem der Ansprüche 1 bis 3, worin Komponente (E) eine Organozinn-Verbindung oder eine Organotitan-Verbindung ist.

5. Silikonkautschuk, der ein gehärtetes Produkt einer bei Raumtemperatur vulkanisierbaren Organopolysiloxan-Zusammensetzung nach einem der Ansprüche 1 bis 4 umfasst.

6. Erzeugnis, das mit einem gehärteten Produkt einer bei Raumtemperatur vulkanisierbaren Organopolysiloxan-Zusammensetzung nach einem der Ansprüche 1 bis 4 beschichtet, abgedichtet oder gebondet ist.

## Revendications

1. Composition d'organopolysiloxane vulcanisable à température ambiante comprenant
(A) 100 parties en poids d'un organopolysiloxane présentant la formule générale (1) : 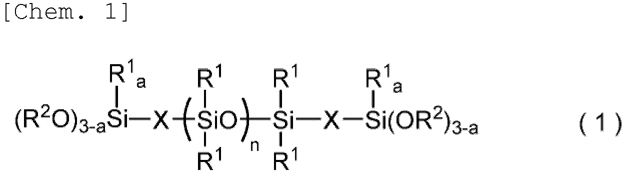 dans laquelle R¹ est indépendamment un groupe hydrocarboné monovalent non substitué ou substitué par un halogène en C₁-C₁₀, n est un nombre entier d'au moins 10, X est l'oxygène ou un groupe alkylène en C₁-C₄, R² est indépendamment un groupe hydrocarboné monovalent non substitué ou substitué en Ci-Ce, et a est 0 ou 1 pour chaque atome de silicium de liaison,
(B) de 0,1 à 30 parties en poids d'un composé d'organosilane hydrolysable présentant la formule générale (2) et/ou d'un condensat hydrolytique partiel de celui-ci, 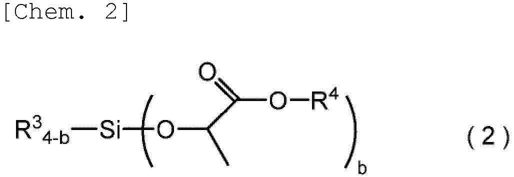 dans laquelle R³ et R⁴ sont chacun indépendamment un groupe hydrocarboné monovalent non substitué ou substitué par un halogène en C₁-C₁₀, et b est 3 ou 4,
(C) de 0,1 à 10 parties en poids d'un composé d'organosilane hydrolysable contenant un groupe amino et/ou d'un condensat hydrolytique partiel de celui-ci,
(D) de 1 à 800 parties en poids d'une charge inorganique, et
(E) de 0,001 à 15 parties en poids d'un catalyseur de durcissement.

2. Composition d'organopolysiloxane vulcanisable à température ambiante selon la revendication 1, dans laquelle le composant (C) est unγ -aminopropyltrialcoxysilane ou un N-β-(aminoéthyl)-γ-aminopropyltrialcoxysilane.

3. Composition d'organopolysiloxane vulcanisable à température ambiante selon la revendication 1, dans laquelle le composant (C) est choisi parmi des composés d'organosilane hydrolysables contenant un groupe amino présentant les formules générales (3), (4) et (5) et/ou des condensats hydrolytiques partiels de ceux-ci, 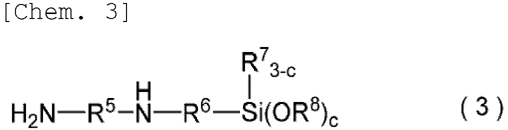
Y=N-Z-SiR₃ (4)
Y-NH-Z-SiR₃ (5)
dans laquelle R⁵ est un groupe hydrocarboné divalent en C₇-C₁₀ contenant une fraction alkylène et un cycle aromatique, à condition qu'au moins l'une des amines primaires et secondaires ne soit pas directement attachée au cycle aromatique dans R⁵, R⁶ est un groupe hydrocarboné divalent en C₁-C₁₀, R⁷ est un groupe hydrocarboné monovalent non substitué en C₁-C₁₀, R⁸ est indépendamment un groupe hydrocarboné monovalent non substitué ou substitué en C₁-C₁₀, c est 2 ou 3, Y est un groupe hydrocarboné mono ou divalent en C₁-C₁₅ contenant au moins deux atomes d'azote dans sa structure, Z est un groupe hydrocarboné divalent non substitué ou substitué en C₁-C₁₀ qui peut contenir un hétéroatome, R est un groupe monovalent d'au moins un type choisi parmi des groupes hydrolysables en Ci-Ce et des groupes hydrocarbonés monovalents en Ci-Ce, au moins deux des trois groupes R liés à l'atome de silicium sont des groupes hydrolysables.

4. Composition d'organopolysiloxane vulcanisable à température ambiante selon l'une quelconque des revendications 1 à 3, dans laquelle le composant (E) est un composé d'organoétain ou un composé d'organotitane.

5. Caoutchouc de silicone comprenant un produit durci de la composition d'organopolysiloxane vulcanisable à température ambiante selon l'une quelconque des revendications 1 à 4.

6. Article qui est enduit, scellé, fixé ou lié par un produit durci de la composition d'organopolysiloxane vulcanisable à température ambiante selon l'une quelconque des revendications 1 à 4.
